# EUROPEAN PATENT SPECIFICATION

(11) **EP 2 081 324 B1**
(45) Date of publication and mention of the grant of the patent: **09.01.2013**
(21) Application number: 08290046.5
(22) Date of filing: 21.01.2008
(51) Int. Cl.: H04W 48/18

(54) **Method and system for selecting a radio access platform,**
Verfahren und System zur Auswahl einer Funkzugangsplattform.
Procédé et système pour la sélection d'une plate-forme d'accès radio.

(43) Date of publication of application: 22.07.2009
(73) Proprietor: Alcatel Lucent, 75007 Paris (FR)
(72) Inventor: Finizola E Silva, Leonardo, 9250 Waasmunster (BE); Liekens, Johan, 3221 Holsbeek (BE); Thiebaut, Laurent, 92160 Antony (FR)
(74) Representative: ALU Antw Patent Attorneys

(56) References cited:
- WO-A2-2004/086667
- US-A- 6 058 102
- US-A1- 2005 135 310
- US-A1- 2006 246 844
- US-A1- 2007 142 064
- US-A1- 2007 177 510
- US-A1- 2008 002 612

## Description

The present invention generally relates to a method for selecting a radio access platform, typically a base station or a Node-B, between two or more radio access platforms being able to serve a mobile node, each radio access station having a backhaul connectivity towards a core network, according to the preamble of claim 1. The invention further relates to a radio access platform according to the preamble of claim 6 and to a system comprising such a radio access platform and to a reflecting device, particularly for use in the method of the invention.

US 2007/0177510 discloses a mobile communication system for balancing of loads on backhaul and sidehaul links in a wireless network by maintaining at a base station a list of neighbouring base stations including information about the backhaul congestion between neighbouring base stations in the core network.

WO 2004/086667 discloses a system for providing wireless connectivity for a large number of users employing a network of nodes each of which contain an appropriate set of functional modules to provide at that node the required connectivity services and a processor to run the controlling software. The software ensures that nodes are intelligent, self-contained and act to discover their neighbours.

A typical radio network, such as the traditional cellular telephone network, comprises a plurality of radio access platforms (e.g. Node-B in a UMTS (Universal Mobile Telecommunications System) Radio Access Network (UTRAN) or a base station BS in a GSM network) controlled by radio resource controllers, e.g. a Radio Network Controller (RNC) in a UTRAN network or a base station controllers BSC in a GSM network or an internal radio resource controller (ENB (Evolved Node-B) in case of E-UTRAN (Evolved UTRAN for 3GPP "Long Term Evolution" radio)). Such a radio access or base station system is responsible for handling traffic and signalling between a mobile node or user equipment UE (or mobile station, e.g. a mobile phone or a laptop) and a core network. In the current radio networks, the radio resource controller uses radio measurements (radio coverage), power control, radio congestion, etc to decide upon the best radio access platform to serve a certain mobile node.

The development of technologies, such HSDPA/HSUPA (High Speed Downlink/Uplink Packet Access, a standard improving the UMTS mobile phone standard), EVDO (Evolution Data Optimized, part of the CDMA2000 family of standards), WiMax (Worldwide Interoperability for Microwave Access), E-UTRAN/LTE (Evolved-UTRAN for 3gpp Long Term Evolution, a new 3GPP standard for public radio access), etc has significantly increased the radio capacity of the radio access platforms enabling new services demanding extra backhaul capacity, i.e. extra capacity of the communication resources between a radio access platform and an operator's core network. This has lead to TDM (Time Division Multiplex) based backhaul being replaced by more powerful and flexible technologies such as IP, Ethernet, DSL, Packet Microwave, etc, and certainly the next backhaul generation will be data based. However, since different services requiring a different QoS will compete for the same resource, resource sharing will need to address QoS requirements so that the service experience is not adversely affected.

According to an existing solution to overcome the backhaul capacity problem extra transmission resources are provided. Typically, the "last mile" backhaul network (i.e. the links towards the base stations) comprises thousands of transmission links, which are usually expensive leased lines.

The object of the invention is to provide a method, a probing device and a reflecting device according to the preamble which provide for a good service experience in the mobile station in a cost-effective way.

To reach this object the method according to the invention is distinguished by the features of the characterizing part of claim 1.

According to a preferred embodiment, wherein the mobile node requests one or more services, the selecting of a radio access platform is further taking into account the type of service requested by the mobile node and/or the conditions of the radio link between the mobile node and said two or more radio access platforms. Typically, when a service by a mobile node is activated, it is determined whether a guaranteed quality of the backhaul connectivity is required, and if yes, the measurement of the at least one condition parameter related to the backhaul connectivity is performed.

In other words the method of the invention relates the service availability of a radio network to the quality of the backhaul connectivity towards the infrastructure of the mobile network. In that way it is possible to move one or more UEs served by a first radio access platform using congested backhaul resources to an alternative radio access platform which is connected to the infrastructure of the mobile network via different backhaul resources while providing a radio condition of sufficient quality to the UEs being moved.

According to a preferred embodiment a hand-over from one radio access platform to another station is performed to assure not only a good radio link but also a good backhaul connectivity towards the infrastructure of the mobile network. More in particular, when a first and a second radio access platform each have a radio link towards a mobile node and the mobile node is being served for a certain type of service by the first radio access platform having a first backhaul connectivity, according to a possible embodiment:
- at least one condition parameter related to the first backhaul connectivity is determined, and
- if the at least one parameter indicates that the first backhaul connectivity is unsuitable for the certain type of service, a hand-over from the first to the second radio platform is done. Naturally it will have to be verified whether the radio conditions and the backhaul conditions of the second radio platform are suitable.

In is noted that the term "radio access platform" as used in the present application refers to any entity providing a radio interface to the mobile nodes (or mobile stations or UEs). In other words radio access platform can e.g. be any of the following: a base transceiver section (BTS) for GSM radio, a Node-B for WBCDMA radio, a base station in WiMAX or 3GPP2 radio, a Femto base station, i.e. a base station located within the premises of a mobile network customer and connected to the mobile network via a backhaul link (e.g. ADSL) provided by another operator, or a Pico base station or an ENB for an E-UTRAN radio.

The operator owning the mobile network infrastructure may be different from the operator owning the backhaul resources. Hence, preferably, the assessment of the condition of the backhaul connectivity does not induce co-operation (either at management level or at signalling level) between both operators. This can for example be reached by exchanging suitable probing/reflection messages between the radio access platform and a reflecting device.

The required backhaul conditions will typically depend on the type of service requested. The one or more condition parameters of the backhaul connectivity to be taken into account when selecting a radio access platform will typically contain one or more of the following parameters: a parameter related to the quality (packet loss, round trip time delay, uplink trip time, downlink trip time), a parameter related to the backhaul network cost, a parameter related to the security, a parameter related to the speed, a parameter related to the available bandwidth. Further examples will be given in the figure description below.

According to a further variant of the method of the invention at least a first and second radio access platform exchange information on the status of their backhaul connectivity as part of their "peer to peer" signalling and said information is taken into account to decide whether a Hand-Over from a first towards a second radio access platform is done. The information on the status of backhaul connectivity may be carried in the "peer to peer" signals as separate information besides the radio cell load information which is already exchanged according to the prior art. Preferably this information on the status of the backhaul connectivity is provided per QoS class. According to another possibility the information on the status of backhaul connectivity may be used to compute a virtual cell load. This possibility can be useful if it is not possible to add separate information e.g. because such additional information is not supported by the receiving radio access platform.

The invention also relates to a radio access platform comprising a probing device connected with a backhaul network having a backhaul connectivity towards a core network, in particular for use with the method of the invention. The probing device is distinguished by the features of the characterizing part of claim 6.

The probing device can be a stand-alone device or can be any of the following devices arranged for sending probe messages:
- a base station in WiMAX or 3GPP2 networks, a Femto base station, a Pico base station, an ENB for E-UTRAN radio, a base transceiver section (BTS) in a GSM network, and a Node-B in WBCDMA networks; wherein the probe messages are typically sent uplink to a reflecting device;
- a base station controller (BSC) or a radio network controller (RNC) in the core network for UTRAN or 3gpp2 radio networks; wherein the probe messages are typically sent downlink to a reflecting device, typically a radio access platform.

The former alternative is more suitable for the case where the entity deciding on the hand-over between radio access platforms is decentralized and hence cannot directly know the conditions of the links connecting to the other radio access platforms, whereas the second option of implementing the probing function in the BSC or RNC inside the network will be interesting in a case where the entity deciding on the hand-over between radio access platforms is centralized. In such a situation the central radio controller (e.g. BSC or RNC) will be regularly probing the radio access platforms and maintain a database of the link conditions of the various radio access systems. Note that the probing interface is also a "keep-alive" check to ensure that the radio access system is still working and accessible.

The invention further relates to a system comprising such a radio access platform and a reflecting device connected with a backhaul network and being arranged for sending reflection messages upon receipt of a probing message from a probing device, for measuring at least one condition parameter of the backhaul connectivity between the radio access platform and the network. The reflecting device can for example be a stand-alone device or the reflecting function can be implemented in an existing device in the network such as a radio resource controller or a router, or can be implemented in the radio access platform if the probe messages are sent downlink, etc.

It is noted that the term "radio resource controller" has to be interpreted as any entity controlling the radio resources. Depending on the technology and on the network deployment the radio resource controller may be co-located in the base station (e.g. Femto, ENB) or centralized in the network in the BSC (GSM) or in the RNC (non Femto UTRAN, 3gpp2 EV-DO networks).

Advantageous embodiments are disclosed in the dependent claims. It is noted that the dependent claims 3-6 may be combined with any of the previous claims.

The accompanying drawings are used to illustrate presently preferred non-limiting exemplary embodiments of the present invention. The above and other advantages features and objects of the invention will become more apparent and the invention will be better understood from the following detailed description when read in conjunction with the accompanying drawings in which:
- Figure 1 shows an example of a number of radio networks according to the prior art in which the method of the invention can be applied;
- Figure 2 shows a network model illustrating the system and method according to an embodiment of the invention;
- Figures 3 shows a flow chart of an embodiment of the method of the invention.

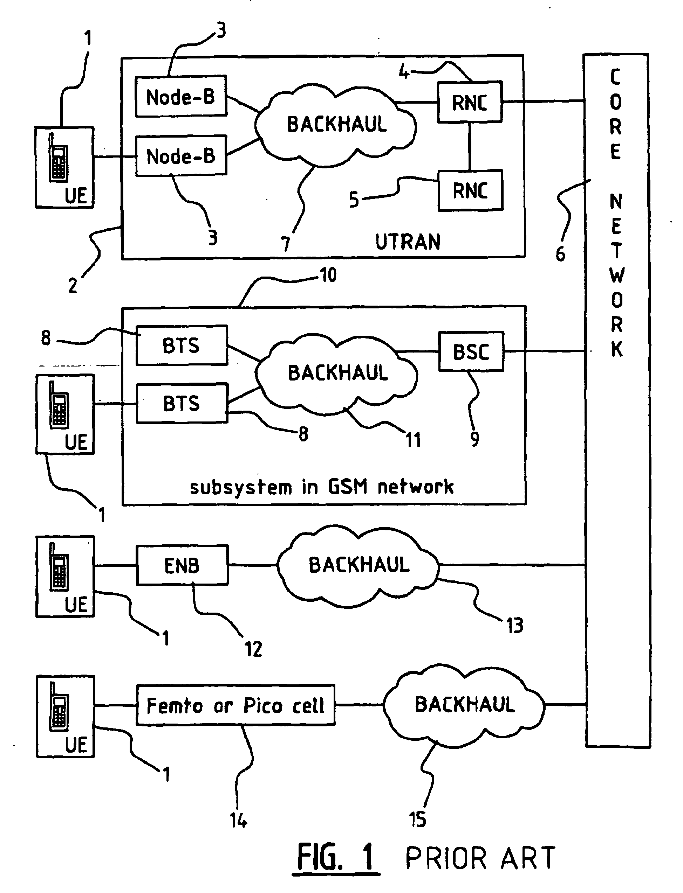

Figure 1 illustrates schematically two public radio networks (a UTRAN network and a GSM network), and a Pico and Femtocell each connected to a mobile network infrastructure.

A UTRAN 2 comprises a number of Node-B's 3 and radio network controllers RNCs 4,5 and allows connectivity between a UE 1 and a core network 6 via a backhaul network 7.

In a traditional cellular telephone network a base station subsystem 10 comprising a plurality of base transceiver sections BTS 8 and a base station controller BSC 9 manages the connection between URs 1, such as mobile phones via a backhaul network 11 and the core network 6.

A Femto or Pico cell 14 is another base station which can be implemented according to the concept of the invention and which is typically located in customer premises or in a public space. The Femto/Pico cell 14 allows the connection of a UE 1 with the core network 16 via a backhaul network 15 and a security gateway (not shown). The backhaul network 15 can for example be a broadband access network. Such a broad band network will typically have an operator different from the operator of the mobile service (UE and core network).

Another possible radio network is an LTE/E-UTRAN network having an enhanced node_B (eNB) 12 allowing the communication via backhaul 13 with the core network 6.

The skilled person will understand that the method of the invention in not only applicable to the radio networks illustrated in figure 1, but can be applied to any radio network system allowing a plurality of UEs to communicate through a core network.

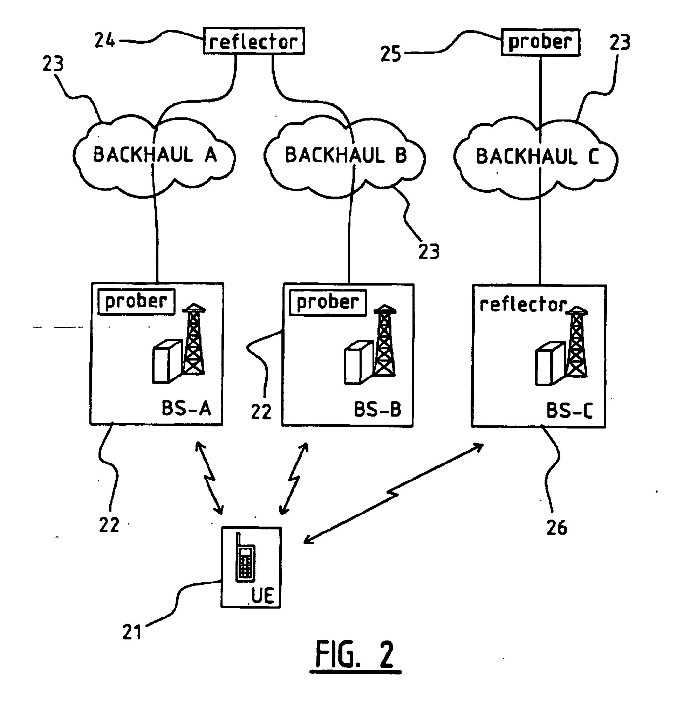

Now an embodiment of the invention will be set out referring to figure 2. In the example given, it is assumed that a base station 22 BS-A is serving user equipments (UEs) 21 using backhaul resources 23 backhaul_A, that a base station 22 BS-B is serving UE using a backhaul resources 23 backhaul_B, and that a base station 26 BS-C is serving UE using backhaul resources 23 backhaul_C. It is further assumed that the user is receiving mobile services via BS-A when the condition of backhaul_A start to downgrade. This can for example be due to congestion in the access link, in the uplink towards the core network or in the downlink towards BS-A, or to overload conditions in certain nodes, etc. BS-A, BS-B and BS-C may correspond to the same or to different radio access technologies. If they correspond to different radio access technologies, it is assumed that moving an UE 21 from one access technology to another one is done only if this UE supports the radio access technology of the target radio access platform.

Typically, a lack of QoS will not be acceptable for certain services, such as a voice type of service or a packet switched (PS) service with guaranteed bit rate such as video or audio streaming. However, other services such as Web browsing are relatively tolerant to QoS problems. Still other services may require a certain speed or a minimum security. Also the cost of the backhaul network may be an issue.

In the example of figure 2 it is assumed that the user is engaged in a telephone call using a mobile phone via BS-A.

In cases A and B the prober or probing device is a radio resource controller located in the base station BS-A and BS-B, respectively, and arranged for sending probe messages uplink. A reflector or reflecting device 24 located in the network has a reflecting function and reflects the probe messages back to the base stations BS-A and BS-B, respectively. In case C the prober is a BSC or RNC located in the network and arranged for sending probe messages downlink. Here the reflecting function is built in BS-C, or in other words BS-C is arranged for sending reflection messages uplink.

The probers probe the condition of the backhaul connectivity, typically at regular intervals, and decide whether the backhaul quality or any other backhaul condition parameter is suitable for the particular service. In the example of figure 2 it is assumed that the quality of backhaul A has become insufficient for a voice service. The base station controller then triggers a hand-over process to BS-B or to BS-C.

It is noted that according to a different embodiment BS-A and BS-B could also be controlled by the same radio resource controller.

Further it is noted that depending on the technology it will be the radio resource controller (BSC for GSM or RNC for UMTS) or the base station itself (eNB for LTE/E-UTRAN ) or in some cases the UE itself (this possibility exists e.g. in Wimax) which will trigger the hand-over.

When there is a hand-over from a first to a second radio access platform, according to an exemplary embodiment of the method, the uplink powers of the UEs still attached to the first radio access platform and still receiving service from BS-A can be adapted to compensate for the UE which has been handed over and which is receiving service from the BS-B layer within the domain of the BS-A cell.

Depending on the network and local policies, such as the way charging of the network is applied, the actual moment on which the hand-over takes place may be different. If BS-A corresponds for example with a Femto cell with a specific charging plan, the RNC may decide to wait until the service is fully activated before handing over the UE to BS-B, so that the specific charging plan can be applied although the UE is actually going to be served over BS-B.

The possible "ping-pong" effect between BS-A and BS-B, i.e. the handing back to BS-A after a hand-over from BS-A to BS-B, can be prevented in different ways depending on the technology used. If BS-A is a Femto station, no ping-pong effect needs to be prevented since the hand-over back from BS-B to BS-A is not possible (the macro layer cannot know the identity of each pseudo-RNC corresponding to a Femto cell and thus cannot immediately trigger back a hand-over).

Depending on the technology the radio access platforms or the radio resource controllers exchange information (e.g. during a handover request/response) as part of their "peer to peer" signalling. This information typically regards the load of the radio interface they manage, but according to an embodiment of the method of the invention this information could also regard the condition of the backhaul connectivity, so that a hand-over towards a radio access platform with an overcrowded backhaul is avoided.

Thus, a way to prevent the "ping-pong" effect is to leverage information that radio access platforms exchange when they accept or reject a Hand-Over or a SRNS relocation request from another radio access platform. Such information currently may contain "Cell Load Information" indicating the current capacity and load status of a cell, and may be stored by the radio access platform receiving such Cell Load Information in order not to attempt a further mobility request (Hand-Over) towards a cell that is known to be overloaded. Adding information about the status of the backhaul link of a radio access platform together with "Cell Load Information" allows preventing a further useless Hand-Over towards a radio access platform having a radio condition which is not overcrowded but a backhaul condition which is for some reason insufficient. There are two ways to improve this mechanism in order to take into account the condition and load of the backhaul of a radio access platform:
1) Information telling the status of the cell backhaul per QoS class / QCI (QoS Class Indicator) may be added besides the cell load information. Having this parameter per QoS class / QCI would enable the source radio access platform to decide whether or not to attempt a Hand-Over of an UE to another radio access platform which is known as having currently a too bad backhaul condition and this depending on the QoS of the service(s) requested by this UE.
2) In case the addition of such a new parameter is not possible (e.g. if the sending radio access platform knows that the receiving radio access platform does not support the new parameter as it is of a too old version or for any other reason), the source radio access platform can compute a cell load information that contains not only the load of the radio but also the load of the backhaul, i.e. that uses the load of the backhaul and the load of the cell to compute the Cell Load Information sent to the other radio access platform.

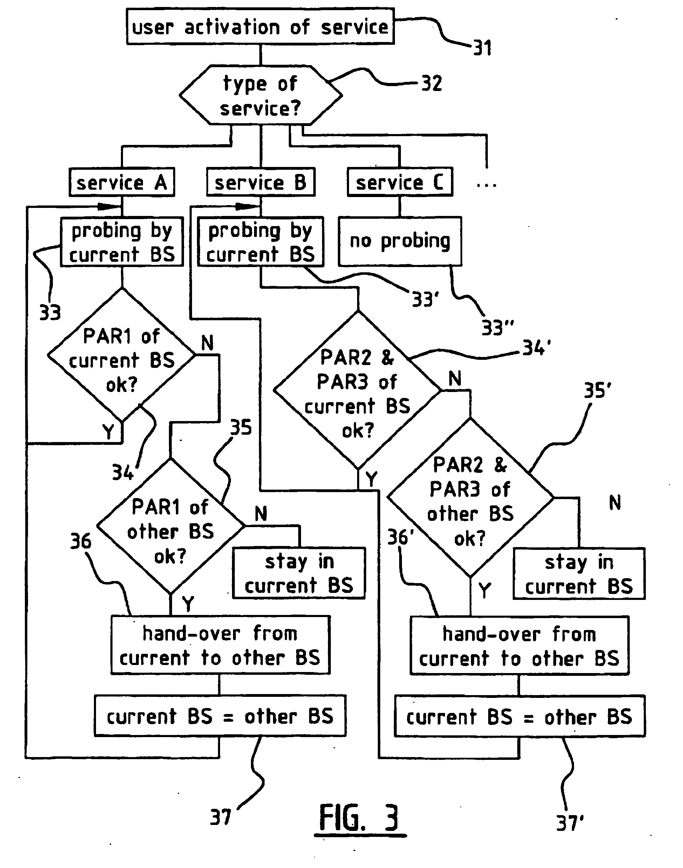

Now the method for probing and deciding on the condition of the backhaul will be further elucidated with reference to figures 2 and 3. The probing of backhaul_A can for example be realized by the base station BS-A sending a probe message in the uplink (UL) direction to a reflector 24 which sends a reflection message back to BS-A. The reflector 24 can be located anywhere in the mobile network infrastructure, and can for example be a router or a stand-alone device or any other device in the network that supports the reflecting functionality as set out below.

This probing, which means in this embodiment sending of probe messages by a prober and reflection messages by a reflector can be activated permanently or conditionally. It may for example only be activated when a user activates a service that requires a guaranteed QoS, or if a user with an already activated service with a guaranteed QoS is handed over from a different base station to this base station. This is illustrated in figure 3. Upon activation of a service by a user (step 31), first the type of service is determined (step 32), e.g. services A, B, C, etc. In case of service A, probing is started (step 33) and a first backhaul condition parameter PAR1 is checked (step 34). If PAR1 is not OK for the activated service A, PAR1 of the backhaul connection of another base station is verified (step 35). If this parameter value is suitable and if the measurement reported by the user equipment UE reports a suitable radio condition for the UE on this other base station, then a hand-over process from the current base station to the other base station is triggered (step 36). The current backhaul becomes the backhaul of the other base station (step 37), and the probing is continued for the latter (step 33).

It is noted that PAR1 of the backhaul of the current base station could also be compared with PAR1 of the backhaul of the other available base stations, wherein a hand-over to another base station is triggered in case of a better backhaul connectivity of this other base station.

If none of the backhaul connectivity's of the available base stations are suitable other known methods may be envisaged to resolve the backhaul problem, such as changing to a content coding which is less demanding in terms of resources, such as a change of AMR codec mode.

In the example of figure 3 it is assumed that the radio conditions are OK, and the skilled person will understand that both the radio and the backhaul conditions need to be taken into account when deciding on a hand-over. Usually avoiding radio congestion should be preferred to avoiding backhaul congestion, because radio congestion implies generating interferences to neighbouring cells and thus has consequences beyond the location of the congestion.

Certain services may require that more than one backhaul condition parameter is verified. In the example of figure 3, service B checks whether PAR2 and PAR3 have suitable values for service B (step 34'). The rest of the method steps (steps 33', 35', 36', 37') are similar to the steps for service A and will not be repeated here.

Further certain services may not require a guaranteed quality of service or a good security, etc, in which case probing is not necessary. In the example of figure 3, service C does not require probing (step 33").

It is noted that figure 3 is merely an example and that the conditions determining the need for a hand-over may be dependent on many factors such as QoS service requirements, availability of radio coverage, possibility to reduce traffic over a backhaul, etc.

Now the probing and the backhaul condition parameters will be discussed in detail according to possible embodiments of the invention. The probe messages sent by the base station node could comprise an indication about the time the message is sent, such as a time stamp, and an identifier, such as a sequence number. The reflection message typically comprises the same identifier as the probe message (or a variable related thereto), an indication of the time the message was received (e.g. the uplink trip time - see below) and an indication of the time the message was sent by the reflector. In that way the quality of the backhaul can be assessed based on a number of quality parameters, e.g. a number of time delay parameters and/or any packet losses:
- packet loss: if a packet with a certain sequence number is not received in return within a certain time frame, it is considered to be lost;
- Round Trip Time (RTT) delay: the delay between sending the probe message by the base station and receiving the reflection message by the base station, i.e. the delay up and down for the mobile network infrastructure;
- Uplink (UL) Trip Time: the delay between sending the probe message by the base station and receiving the probe message by a reflector;
- Downlink (DL) Trip Time: the delay between sending the reflection message by a reflector and receiving the reflection message by the base station.

In case of service A in figure 3 being a conversation service, PAR1 could for example be the RTT delay, while in case of service A being a streaming service PAR1 could for example be the DL Trip Time.

According to a further embodiment other backhaul condition parameters could be used such as cost, bandwidth, security, etc. Such parameters generally correspond to configuration data of the backhaul and can be obtained in any suitable way.

While the principles of the invention have been set out above in connection with specific embodiments, it is to be clearly understood that this description is merely made by way of example and not as a limitation of the scope of protection which is determined by the appended claims.

## Claims

1. Method for selecting a radio access platform between two or more radio access platforms being able to serve a mobile node, each radio access platform having a radio link towards said mobile node and a backhaul connectivity towards a core network, a first and a second radio access platform being able to serve the mobile node, wherein the mobile node is being served a type of service by the first radio access platform having a first backhaul connectivity, **characterized in that** a radio access platform is selected taking into account at least one condition parameter of the backhaul connectivity of the two or more radio access platforms in the following way:
- at least one condition parameter related to the first backhaul connectivity is determined by exchanging probe/reflection messages between the radio access platform and the core network, and
- if the at least one parameter indicates that the first backhaul connectivity is unsuitable for said type of service, a hand-over from the first to the second radio access platform is done.

2. Method of claim 1, wherein the radio access platform is a Femto base station.

3. Method according to claim 1, wherein the mobile node requests one or more services, **characterized in that** the selecting of a radio access platform is further taking into account the type of service requested by the mobile node and/or the conditions of the radio link between the mobile node and said two or more radio access platforms.

4. Method according to claim 1, **characterized in that** upon activation of a service by a mobile node it is determined whether this service requires the condition of the backhaul connectivity to be of a certain level, and if yes, the measurement of the at least one condition parameter related to the backhaul connectivity is performed.

5. Method according to claim 1, **characterized in that** the at least one condition parameter of the backhaul connectivity contains one or more of the following parameters: a parameter related to the quality (packet loss, round trip time delay, uplink trip time, downlink trip time), a parameter related to the backhaul network cost, a parameter related to the security, a parameter related to the available bandwidth.

6. Radio access platform comprising a probing device connected with a backhaul network having a backhaul connectivity towards a core network, **characterized in that** the probing device is arranged for sending probe messages to the core network and for receiving reflected probe messages from the core network, for measuring at least one condition parameter of the backhaul connectivity between the radio access platform and the core network.

7. Radio access platform according to claim 6, **characterized in that** the radio access platform is one of the following devices: a Femto base station, a Pico base station, an ENB for E-UTRAN radio, a base station in WiMAX, a base transceiver section (BTS) in a GSM network, a Node-B in WBCDMA networks

8. System comprising a radio access platform according to claim 6 or 7 and a reflecting device connected with the backhaul network, **characterized in that** the reflecting device is arranged for sending reflection messages upon receipt of a probing message from a probing device, for measuring at least one condition parameter of the backhaul connectivity, between the radio access platform and the core network.

9. System according to claim 8, **characterized in that** the reflecting device is one of the following: a stand-alone device connected to the backhaul network, a radio resource controller, a radio access platform, a router.

## Patentansprüche

1. Verfahren zur Auswahl einer Funkzugangsplattform unter zwei oder mehr Funkzugangsplattformen, die fähig sind, einen mobilen Knoten zu bedienen, wobei jede Funkzugangsplattform über eine Funkverbindung zu dem besagten mobilen Knoten und eine Backhaul-Konnektivität zu einem Kernnetzwerk verfügt, wobei eine erste und eine zweite Funkzugangsplattform fähig sind, den mobilen Knoten zu bedienen, wobei der mobile Knoten von der ersten Funkzugangsplattform, welche über eine erste Backhaul-Konnektivität verfügt, mit einem Diensttyp versorgt wird, **dadurch gekennzeichnet, dass** eine Funkzugangsverbindung unter Berücksichtigung mindestens eines Zustandsparameters der Backhaul-Konnektivität der zwei oder mehr Funkzugangsplattformen wie folgt ausgewählt wird:
- Es wird mindestens ein die erste Backhaul-Konnektivität betreffender Zustandsparameter durch Austauschen von Prüf-/Reflexionsnachrichten zwischen der Funkzugangsplattform und dem Kernnetzwerk ermittelt, und
- wenn der mindestens eine Parameter anzeigt, dass die erste Backhaul-Konnektivität für den besagten Diensttyp ungeeignet ist, wird ein Handover von der ersten an die zweite Funkzugangsplattform durchgeführt.

2. Verfahren nach Anspruch 1, wobei die Funkzugangsplattform eine Femto-Basisstation ist.

3. Verfahren nach Anspruch 1, wobei der mobile Knoten einen oder mehrere Dienste anfordert, **dadurch gekennzeichnet, dass** die Auswahl einer Funkzugangsplattform weiterhin den von dem mobilen Knoten angeforderten Diensttyp und/oder die Zustände der Funkverbindung zwischen dem mobilen Knoten und den besagten zwei oder mehr Funkzugangsplattformen berücksichtigt.

4. Verfahren nach Anspruch 1, **dadurch gekennzeichnet, dass** nach der Aktivierung eines Dienstes durch einen mobilen Knoten ermittelt wird, ob dieser Dienst erfordert, dass der Zustand der Backhaul-Konnektivität einer bestimmten Stufe entspricht, und, wenn dies der Fall ist, eine Messung des mindestens einen die Backhaul-Konnektivität betreffenden Zustandsparameters durchgeführt wird.

5. Verfahren nach Anspruch 1, **dadurch gekennzeichnet, dass** der mindestens eine Zustandsparameter der Backhaul-Konnektivität einen oder mehrere der folgenden Parameter enthält: Einen sich auf die Qualität (Paketverlust, Rundlaufzeitverzögerung, Uplink-Laufzeit, Downlink-Laufzeit) beziehenden Parameter, einen sich auf die Backhaul-Netzwerk-Kosten beziehenden Parameter, einen sich auf die Sicherheit beziehenden Parameter, einen sich auf die verfügbare Bandbreite beziehenden Parameter.

6. Funkzugangsplattform mit einer Prüfvorrichtung, die mit einem Backhaul-Netzwerk verbunden ist, welches über eine Backhaul-Konnektivität zum Kernnetzwerk verfügt, **dadurch gekennzeichnet, dass** die Prüfvorrichtung dazu ausgelegt ist, Prüfnachrichten an das Kernnetzwerk zu senden und reflektierte Prüfnachrichten von dem Kernnetzwerk zu empfangen, um mindestens einen Zustandsparameter der Backhaul-Konnektivität zwischen der Funkzugangsplattform und dem Kernnetzwerk zu messen.

7. Funkzugangsplattform nach Anspruch 6, **dadurch gekennzeichnet, dass** die Funkzugangsplattform eine der folgenden Vorrichtungen ist: Eine Femto-Basisstation, eine Pico-Basisstation, ein ENB für E-UTRAN-Funk, eine Basisstation in WiMAX, ein Basistransceiverteil (BTS) in einem GSM-Netzwerk, ein B-Knoten in WBCDMA-Netzwerken.

8. System, umfassend eine Funkzugangsplattform nach Anspruch 6 oder 7 und eine mit dem Backhaul-Netzwerk verbundene reflektierende Vorrichtung, **dadurch gekennzeichnet, dass** die reflektierende Vorrichtung dazu ausgelegt ist, nach Empfang einer Prüfnachricht von einer Prüfvorrichtung Reflexionsnachrichten zu senden, um mindestens einen Zustandsparameter der Backhaul-Konnektivität zwischen der Funkzugangsplattform und dem Kernnetzwerk zu messen.

9. System nach Anspruch 8, **dadurch gekennzeichnet, dass** die reflektierende Vorrichtung eine der folgenden ist: Eine an das Backhaul-Netzwerk angeschlossene eigenständige Vorrichtung, ein Funkressourcen-Controller, eine Funkzugangsplattform, ein Router.

## Revendications

1. Procédé de sélection d'une plate-forme d'accès radio entre au moins deux plates-formes d'accès radio pouvant desservir un noeud mobile, chaque plate-forme d'accès radio présentant une liaison radio vers ledit noeud mobile et une connectivité de liaison terrestre vers un coeur de réseau, une première et une deuxième plates-formes d'accès radio pouvant desservir le noeud mobile, dans lequel le noeud mobile reçoit un type de service à partir de la première plate-forme d'accès radio présentant une première connectivité de liaison terrestre, **caractérisé en ce qu'**une plate-forme d'accès radio est sélectionnée en tenant compte d'au moins un paramètre de condition de la connectivité de liaison terrestre des au moins deux plates-formes d'accès radio de la manière suivante :
- au moins un paramètre de condition relatif à la première connectivité de liaison terrestre est déterminé en échangeant des messages de sonde/réflexion entre la plate-forme d'accès radio et le coeur de réseau, et
- si l'au moins un paramètre indique que la première connectivité de liaison terrestre n'est pas adaptée audit type de service, un transfert entre les première et deuxième plates-formes d'accès radio est effectué.

2. Procédé selon la revendication 1, dans lequel la plate-forme d'accès radio est une station de base Femto.

3. Procédé selon la revendication 1, dans lequel le noeud mobile demande un ou plusieurs services, **caractérisé en ce que** la sélection d'une plate-forme d'accès radio tient compte en outre du type de service demandé par le noeud mobile et/ou des conditions de la liaison radio entre le noeud mobile et lesdites au moins deux plates-formes d'accès radio.

4. Procédé selon la revendication 1, **caractérisé en ce que** lors de l'activation d'un service par un noeud mobile on détermine si ce service nécessite que la condition de la connectivité de liaison terrestre soit d'un certain niveau, et si tel est le cas, la mesure de l'au moins un paramètre de condition relatif à la connectivité de liaison terrestre est effectuée.

5. Procédé selon la revendication 1, **caractérisé en ce que** l'au moins un paramètre de condition de la connectivité de liaison terrestre contient un ou plusieurs des paramètres suivants : un paramètre relatif à la qualité (perte de paquets, retard de temps de propagation aller-retour, temps de propagation de liaison montante, temps de propagation de liaison descendante), un paramètre relatif au coût du réseau d'amenée, un paramètre relatif à la sécurité, un paramètre relatif à la bande passante disponible.

6. Plate-forme d'accès radio comprenant un dispositif de sonde connecté à un réseau d'amenée présentant une connectivité de liaison terrestre vers un coeur de réseau, **caractérisée en ce que** le dispositif de sonde est conçu pour envoyer des messages de sonde au coeur de réseau et pour recevoir des messages de sonde réfléchis à partir du coeur de réseau, pour mesurer au moins un paramètre de condition de la connectivité de liaison terrestre entre la plate-forme d'accès radio et le coeur de réseau.

7. Plate-forme d'accès radio selon la revendication 6, **caractérisée en ce que** la plate-forme d'accès radio est un des dispositifs suivants : une station de base Femto, une station de base Pico, un ENB pour une radio E-UTRAN, une station de base dans WiMAX, une station émettrice-réceptrice de base (BTS) dans un réseau GSM, un Noeud-B dans des réseaux WBCDMA.

8. Système comprenant une plate-forme d'accès radio selon la revendication 6 ou 7 et un dispositif de réflexion connecté au réseau d'amenée, **caractérisé en ce que** le dispositif de réflexion est conçu pour envoyer des messages de réflexion lors de la réception d'un message de sonde à partir d'un dispositif de sonde, pour mesurer au moins un paramètre de condition de la connectivité de liaison terrestre entre la plate-forme d'accès radio et le coeur de réseau.

9. Système selon la revendication 8, **caractérisé en ce que** le dispositif de réflexion est un des dispositifs suivants : un dispositif autonome connecté au réseau d'amenée, un contrôleur de ressources radio, une plate-forme d'accès radio, un routeur.
